# EUROPÄISCHE PATENTSCHRIFT

(11) **EP 0 761 995 B1**
(45) Veröffentlichungstag und Bekanntmachung des Hinweises auf die Patenterteilung: **24.11.1999**
(21) Anmeldenummer: 96111923.7
(22) Anmeldetag: 24.07.1996
(51) Int. Cl.: F16C 7/04, F16F 5/00

(54) **Pleuelstange**
Connecting rod
Bielle

(30) Priorität: 17.08.1995 DE 19530191
(43) Veröffentlichungstag der Anmeldung: 12.03.1997
(73) Patentinhaber: DaimlerChrysler AG, 70567 Stuttgart (DE)
(72) Erfinder: Krämer, Michael, Dr., 73274 Notzingen (DE); Schmidt, Karlwalter, 88131 Lindau (DE)

(56) Entgegenhaltungen:
- CH-A- 252 208
- DE-A- 2 734 447
- DE-A- 3 339 360
- DE-A- 3 735 415
- DE-A- 3 804 859
- SU-A- 912 962
- US-A- 1 610 137
- US-A- 2 523 631
- US-A- 2 580 825
- US-A- 4 703 838

## Beschreibung

Die Erfindung betrifft eine Pleuelstange zur Übertragung von Energie zwischen einem Kolben und einer Kurbelwelle einer Hubkolbenmaschine der im Oberbegriff des Anspruchs 1 genannten Gattung.

Bei Hubkolbenmaschinen treten während des Betriebes im Kompressionsraum hohe Drücke auf. Bei Otto- und Dieselmotoren kommt es durch den Verbrennungsvorgang zu einem schlagartig ansteigenden Druck auf den im oberen Totpunkt stehenden Kolben. Hierdurch entsteht eine Druckspitze, deren Energie - bedingt durch die Trägheit des Kurbeltriebes - bislang nicht nutzbar ist.

Aus der DE-OS 33 39 360 ist eine zweiteilige Pleuelstange für einen Hubkolbenmotor bekannt geworden, deren Pleuelhälften teleskopartig gegeneinander verschiebbar sind und zwischen denen eine in Richtung ihrer Längsachse wirksame, auf Zug und Druck beanspruchbare Feder angeordnet ist. Beim Arbeitstakt nimmt die Feder als Kraftspeicher einen Teil der Energie auf, um diese beim Aufwärtsbewegen des Kolbens wieder abzugeben.

Es hat sich jedoch gezeigt, daß beim kinematischen Bewegungsvorgang einer einen Verschiebefreiheitsgrad in Pleuellängsrichtung aufweisenden Pleuelstange so hohe Beschleunigungen auftreten, daß die Feder durch die Schwingung um die Federnullage hin zur maximalen Zugbelastung und zurück zur maximalen Druckbelastung rascher Materialermüdung unterliegt.

Insbesondere bei Lastwechseln treten starke Schwankungen des Spitzendruckes auf, die leicht zum Bruch oder wenigstens zu einer unerwünschten Längung der mechanisch und thermisch höchstbelasteten, als Leistungsübertragungsglied dienenden Feder führt, wodurch in den Kompressionsraum hineinragende Ein- bzw. Auslaßventile der Hubkolbenmaschine gefährdet werden.

Ferner hat sich gezeigt, daß beim Durcheilen des unteren Totpunktes im Betrieb mit einer zweiteiligen Pleuelstange nach der DE-OS 3 339 360 eine stoßartige Belastung des Kolbenzapfens auftritt. Diese ist darin begründet, daß der Abbremsvorgang des abwärts eilenden Kolbens nicht stetig, wie bei einem herkömmlichen, steifen Pleuel, sondern erst einige Kurbelgrade nach Durcheilen des unteren Totpunktes (UT) ruckartig endet, also dann, wenn der Kurbelzapfen bereits eine zunehmend stark beschleunigte Aufwärtsbewegung ausführt. Die beiden kinematischen Bewegungen des einerseits in seiner Abwärtsbewegung beharrenden Kolbens und der diese entgegengesetzten, mit rasch ansteigender Beschleunigung erfolgenden Aufwärtsbewegung des Kurbelzapfens wirken sich besonders nachteilig auf die Kinematik aller an der Drehung der Kurbelwelle beteiligten Bauteile aus. Da, bedingt durch die laufende Änderung der geometrischen Zuordnung von Kolben und Kurbelzapfen, das am Kolbenzapfen wirkende Trägheitsmoment der hin- und hergehenden Massen schwankt, ist der Bewegungsablauf unsymmetrisch. Die in der Feder gespeicherte Energie der Druckspitze kann also nicht genutzt werden. Ist nämlich die Druckspitze abgeklungen, streckt sich die Feder über die Nullinie hinaus und es wird die Energie wieder an den Kolben zurückgegeben. Diese Unsymmetrie im Weg-/Zeitverhalten des Kurbeltriebes beeinträchtigt stark die Qualität der Verbrennung und verursacht eine stark schwellende Lagerlast, die zu frühzeitigem Verschleiß führt.

Ferner ist bei Hubkolbenverbrennungskraftmaschinen in der Regel ein mehrere 1000 Umdrehungen pro Minute umfassender Drehzahlbereich abzudecken. Hierbei muß auf die dynamische Eigenfrequenz der Feder größte Rücksicht genommen werden, wodurch der mögliche Betriebsbereich, in der die Flammfront der Verbrennung nicht durch auf den Kolben rückwirkende Schwingungen gestört wird, stark eingeschränkt ist. Aufgrund des beschriebenen ungünstigen kinematischen Verhaltens sind häufige Wartungsintervalle vorzusehen, um die Betriebssicherheit zu gewährleisten. Im Hinblick auf die Anforderungen bei modernen Hubkolbenmaschinen an geringen Schadstoffausstoß, hohe Lebensdauer, Laufkultur und großen nutzbaren Drehzahlbereich sowie möglichst lange Wartungsintervalle konnte sich dieses Pleuel nicht durchsetzen.

Zur Vermeidung der vorstehend beschriebenen Probleme wird in der DE-OS 38 04 859 als Abhilfe ein Federkraft-Pleuel vorgeschlagen, das aus einer Stahlhülse besteht, in deren Umfang eine Spiralwindung eingeschnitten und in deren Hülsenkopf ein Pleuelauge eingeschweißt ist. Der Hülsenboden weist ferner ein zweiteiliges Kolbenzapfenlager auf. Auf den üblichen Kompressionsraum soll dort gänzlich verzichtet werden, da im Verdichtungstakt der Druck so stark ansteigen soll, daß die Feder nachgibt, und dadurch ein Volumen für den nicht eingeplanten Kompressionsraum im Zylinder schafft. Um das verbleibende Volumen im oberen Totpunkt (OT) so gering wie möglich zu halten, ist das Auslaßventil dort als Ringventil ausgebildet. Dies soll die Verbrennung verbessern und die durch die vorbeschriebene unsymmetrische Kinematik hervorgerufene Klopfneigungen vermeiden.

Nach der Lehre der DE-OS 38 04 859 ist der Durchmesser der Feder möglichst groß zu wählen. Dies hat zwar den Vorteil, daß die Feder relativ steif auszubilden ist, und so die Unsymmetrie im Weg-/Zeitverhalten verringert wird, aber andererseits zu unerwünscht großen oszillierenden Massen führt. Ferner bedingt die Anwendung eines solchen Federkraft-Pleuels die völlige Umgestaltung des gesamten Kompressionssraumes sowie des Zylinderkopfes, der mit einem Ringventil auszustatten ist. Auch unterliegt das Ringventil aufgrund seiner großflächig im Abgasstrom liegenden Ringfläche höchster, kaum beherrschbarer thermischer Belastung. Eine wirksame Abdichtung des Kompressionsraumes ist schwierig, da die Last des Verbrennungsdruckes auf das Ringventil nicht von einem üblichen Ventilsitz, sondern von den Steuerorganen des Ringventils aufgenommen wird. Da aber immer mechanisches Laufspiel vorzusehen ist, ist eine wirksame Abdichtung und Kühlung nur mit großem, das Fahrzeuggewicht erhöhenden Aufwand erzielbar. Bedingt durch die großen hin und hergehenden Massenanteile ist der Kurbelzapfen zusätzlich stark belastet. Diese Belastung führt zu hoher Flächenpressung, die den mechanischen Wirkungsgrad und die Lagerlebensdauer - insbesondere des Kurbelzapfenlagers - reduziert. Zusätzlich werden Eigenschwingungen der Feder angeregt, die einen Bruch der Feder oder der Kurbelwelle verursachen können und die bei der Verbrennung eine ungleichmäßige Flammfrontausbreitung bedingen, welche zu klopfender, unvollständiger Verbrennung führen.

Bei Ottomotoren sind geregelte Abgaskatalysatoren üblich, deren Katalysationsvermögen um so besser ist, je besser die Verbrennung an sich ist. Zwar erlauben bekannte Federkraft-Pleuel eine selbsttätige Anpassung des Verdichtungsverhältnisses durch eine niedrigere Verdichtung bei Vollast und eine höhere Verdichtung bei Teillast, doch beeinflußt die beschriebene Problematik des Kurbeltriebes bei lastabhängig unterschiedlichem Füllungsgrad bei Ottomotoren auch den Zündzeitpunkt, bzw. bei Dieselmotoren den Einspritzpunkt so nachteilig, daß die für die Erfüllung von Abgasnormen geforderte hohe Verbrennungsqualität nur in einem schmalen Drehzahl- bzw. Lastbereich realisierbar ist. Jenseits dieser schmalen Bereiche verschlechtert sich die Verbrennung gravierend.

Die Anwendung bekannter Federkraft-Pleuel ist deshalb bei Otto- oder Dieselmotoren besonders schwierig. Vor allem beeinträchtigt aber das mechanisch harte Aufsetzen der Feder bei Erreichen der Federblocklänge die Ausbreitung der Flammfront im Verbrennungsraum eines benachbarten Zylinders bei Mehrzylindermaschinen. Die Folgen sind unvollständige Verbrennung, Klopfneigung, hohe Lagerbelastung, hohe mechanische Belastung des Kurbeltriebes und starke Geräuschemission.

Des weiteren sind zweiteilige Pleuelstangen für Hubkolbenmotoren bekannt, bei denen der Kraftspeicher zwischen den Pleuelhälften als Fluidfeder ausgebildet ist. Die US 1,610,137 offenbart eine fluidgefederte Pleuelstange, bei denen zwischen den gegeneinander verschieblichen Pleuelteilen eine gasgefüllte Kammer gebildet ist. Bei einer Einfederung der Fluidfeder wird das Gaskissen komprimiert und bei Nachlassen der auf den Kolben wirkenden Druckkraft bewirkt der hohe Kompressionsdruck im Luftkissen die Rückstellbewegung in die Ausgangslage. Das freie Ende des kolbenseitigen Pleuelteils ist glockenartig ausgebildet und schließt mit seiner zylindrischen Schürze das Luftpolster ein. Die Glocke taucht in ein Ölreservoir ein, welches im kurbelwellenseitigen Pleuelteil zur Abdichtung des Luftpolsters bereitgehalten ist.

Aus der CH 252208 ist eine Pleuelstange bekannt, bei der zwischen den relativ zueinander verschiebbaren Pleuelhälften ein Flüssigkeitsvolumen eingeschlossen ist, welches von der Einfederungsbewegung mit Druck beaufschlagbar ist zur Speicherung von Energie. Die beiden Pleuelhälften sind nach Art einer hydraulischen Zylinder/Kolben-Einheit ineinander geschoben, wobei das kurbelwellenseitige Pleuelteil den Zylinder bildet und das kolbenseitige Pleuelteil in dem Zylinder ein Ölvolumen einschließt und hydraulisch mit der Druckkraft das Pleuel beaufschlagt.

Eine ähnliche, kinematisch umgekehrte Anordnung einer Fluidfeder in einer geteilten Pleuelstange geht aus der SU 912962 hervor, wobei der kurbelwellenseitige Pleuelteil den Kolben innerhalb der hydraulischen Kolben/Zylinder-Einheit bildet. Die Fluidkammer ist bei der bekannten Anordnung innerhalb des Kolbenbolzens ausgebildet, welcher den Kolben des Verbrennungsmotors auf dem Pleuelende schwenkbar lagert. Der kurbelwellenseitige Pleuelteil ragt in die Fluidkammer im Kolbenbolzen ein, wobei ein Zapfen am freien Ende längsbeweglich im flüssigkeitsgefüllten Gehäuse des Kolbenbolzens geführt ist. Auch bei dieser Pleuelstange sind die beiden Pleuelhälften längs gegeneinander verschieblich unter Druckbeaufschlagung der abgeschlossenen Fluidfederkammer.

Mit bekannten Pleuelstangen ist die gewünschte Übertragung des Spitzendruckes beim Verbrennungstakt bei Hubkolbenverbrennungskraftmaschinen und beim Verdichtungstakt bei Hubkolbenkompressoren oder -pumpen nicht realisierbar.

Der Erfindung liegt die Aufgabe zugrunde, eine Pleuelstange der gattungsgemäßen Art zu schaffen, mit der die Energie von Druckspitzen möglichst vollständig auf den Kurbeltrieb übertragbar ist, ohne die Kinematik des Kurbeltriebes und die Leistungscharakteristik nachteilig zu beeinflussen und bei Otto- und Dieselmotoren die weitere Reduzierung von Verbrennungsschadstoffen zu ermöglichen.

Diese Aufgabe wird erfindungsgemäß durch die Merkmale des Anspruchs 1 gelöst.

Hierzu wird erfindungsgemäß eine Pleuelstange angegeben, bei der der Kraftspeicher als eine ein- oder mehrstufige Fluidfeder ausgebildet ist, und die allgemein auch für eine ein- oder mehrzylindrige Hubkolbenmaschine einsetzbar und ohne Umbaumaßnahmen nachrüstbar ist.

Die Erfindung nutzt die Elastizität einer Flüssigkeit. In kaltem Betriebszustand ist die Fluidfeder nach der Erfindung sehr steif. Dies begünstigt das Startvermögen, da erfahrungsgemäß die Start-Verdichtung - insbesondere bei Dieselmotoren und tiefen Temperaturen - über der optimalen Verdichtung liegen soll. Nimmt mit zunehmender Betriebstemperatur die Elastizität des in der Fluidfeder enthaltenen Fluids zu, so wird die Fluidfeder weicher. Unter einem Druck von 100 bar und 100°C wird z.B. bei gebräuchlichen Motorenölen eine Volumenkompression von etwa 1 % erreicht. Bei Unterdruck tritt eine entsprechend geringe Vergrößerung des Volumens ein. Diese Nachgiebigkeit des Motorenöls bedingt eine geringe, die Kinematik des Kurbeltriebes nicht nachteilig beeinflussende geometrische Verkürzung der Pleuelstangenlänge, die aber ausreicht, die Verdichtung lastabhängig so weit zu begünstigen, daß, unabhängig vom Füllgrad, eine optimale Flammfrontausbreitung und damit gleichmäßige Verbrennung erzielt wird. Dabei ist die Fluidfeder so steif, daß für die Kinematik und die Verbrennung nachteilige Schwingungen zwischen Kolben und Kurbelzapfen unterbleiben.

Während des Arbeitstaktes nimmt die Fluidfeder durch Druckspitzen verursachte Energie sofort auf und gibt sie aufgrund der Anordnung des Verzögerungsglieds zeitgedehnt an die Kurbelwelle ab, sobald der Druck auf die Pleuelstange nachläßt. Die Kinematik wird dadurch optimal begünstigt, so daß Lagerbelastungen auf ein absolutes Minimum reduziert werden. Durch den hohen Gleichförmigkeitsgrad wird sowohl die Lebensdauer der Lagerungen und aller umlaufender Bauteile wesentlich verlängert als auch die Voraussetzung für eine sich gleichmäßig ausbreitende Flammfront geschaffen, so daß die Schadstoffemission weiter reduzierbar ist.

Auf diese Weise wird also die in der Druckspitze liegende Energie nutzbar. Da der Kompressions- und anschließende Entspannungsvorgang sehr schnell erfolgt, unterbleibt eine größere Erwärmung des Fluids in der Fluidfeder.

Bei größeren Volumina verursacht jedoch die Fluidreibung eine Erwärmung des Fluids in der Fluidfeder. Dies wird erfindungsgemäß dadurch vermieden, daß eine oder jede Stufe der Fluidfeder und das Verzögerungsglied Teil des Druckölschmiersystems der Hubkolbenmaschine ist, so daß das darin enthaltene Drucköl laufend umgewälzt wird.

Um die Longitudinalbewegung des Kolbens in eine Rotationsbewegung der Kurbelwelle umzuwandeln, weist das kolbenseitige Pleuelteil ein Lager zur Führung eines Kolbengelenkelementes auf, welches den Kolben mit der Pleuelstange schwenkbeweglich verbindet. Vorteilhaft ist die schwenkbewegliche Verbindung durch einen Kolbenbolzen vorgesehen, welcher in bekannter Weise sowohl Bolzenaugen des Kolbens als auch des Pleuels durchsetzt. Eine weitere vorteilhafte Ausführung wird darin gesehen, die schwenkbewegliche Verbindung mittels einer kugelgelenkgemäßen Anordnung zu erreichen. Dabei wird das pleuelseitige Gelenkteil kugelförmig ausgebildet und in einem entsprechend sphärisch ausgeformten kolbenseitigen Gelenkteil aufgenommen. Aus baulichen Gründen ist es zweckmäßig, das pleuelseitige Gelenkteil als Kugelschicht mit einer ausreichenden Funktionsfläche vorzusehen.

Es entsteht erfindungsgemäß eine besonders kompakte und wirtschaftlich herstellbare, einstufige Pleuelstange, wenn der dem Kurbelzapfen zugeordnete Pleuelteil als Hohlraum formender Hohlkörper ausgebildet ist, in dem der dem Kolben zugeordnete Pleuelteil ein Druckkolben ist, der einen Pumpraum innerhalb des Hohlkörpers begrenzt und in diesem fluidisch dichtend verschiebbar gelagert ist. Dabei ist der Druckkolben von einer Druckfeder gegen einen Anschlag im Endbereich des dem Kurbelzapfen zugeordneten Pleuelteils kraftschlüssig gehalten, die sich an einem Ankerkopf eines relativ zum kurbelzapfenseitigen Pleuelteil axial einstellbaren Ankers abstützt. Die Fluidfeder wird durch den Hohlraum gebildet, der über eine Ölbohrung im Druckkolben und eine Ölbohrung im Kurbelauge über eine Druckleitung in dem Kurbelzapfen mit dem Druckölschmiersystem der Hubkolbenmaschine fluidisch kommuniziert. Um Rückwirkungen auf das Druckölschmiersystem zu vermeiden, ist die Druckölleitung oder besonders vorteilhaft die Ölbohrung in der Grundplatte des Hohlkörpers mit einem Rückschlagventil versehen.

Das Verzögerungsglied dieser Fluidfeder wird von einer Scheibe gebildet, die unter Bildung eines Überströmspaltes in dem rohrförmig ausgebildeten kurbelzapfenseitigen Pleuelteil verschieblich gelagert ist. Die Scheibe ist von dem Anker durchsetzt. Der Ankerkopf weist ferner eine Dichtfläche auf, die mit einer Dichtfläche an der Scheibe in Wirkverbindung steht. Die Scheibe ist von einer sich an dem Anker abstützenden, axial einstellbaren Druckfeder gegen die Dichtfläche des Ankerkopfes kraftbeaufschlagt gehalten. Beim Zusammendrücken der Fluidfeder wird die zentrische Bohrung der Scheibe teilweise frei. Dadurch wird der Strömungsquerschnitt vergrößert und es kann in kurzer Zeit ein größeres Teilvolumen Drucköl von dem Pumpraum in den Hohlraum gelangen. Beim Entspannen der Fluidfeder wird die Bohrung mittels der Dichtflächen wieder geschlossen. Das Drucköl kann nur durch den am Scheibenrand gebildeten Überströmspalt vom Hohlraum zurück in den Pumpraum gelangen. In der Scheibe kann auch eine zusätzliche Überströmöffnung vorgesehen sein, die den Pumpraum mit dem Hohlraum fluidisch verbindet. Der Querschnitt des Überströmspalts bzw. der Überströmbohrung bestimmt die Zeitspanne, über die die in der Fluidfeder gespeicherte Energie ohne große Verlust abgegeben, die schnelle Rückbewegung der Feder nach dem Einfedern jedoch verhindert wird.

Eine besonders vorteilhafte Ausgestaltung nach der Erfindung für eine Pleuelstange mit einer zweistufigen Fluidfeder besteht darin, daß in dem Hohlkörper ein Innenrohr angeordnet ist, das einen ersten Hohlraum von einem zweiten Hohlraum trennt, wobei der erste Hohlraum mit dem Pumpraum über Öffnungen konstanten Querschnitts und der Pumpraum mit dem zweiten Hohlraum über Ventilmittel veränderlichen Querschnitts in Verbindung steht. Diese Ausgestaltung kann bei Hubkolbenmaschinen Anwendung finden, bei denen der Druckanstieg funktionsbedingt zunächst eine erste Federkennlinie und unter bestimmten Betriebsbedingungen eine zweite Federkennlinie erfordert. Hierbei sind die Federkennlinien sowohl im Verhältnis erst steil, dann flach als auch erst flach, dann steil durch die Wahl der Volumenverhältnisse der Fluidräume zueinander besonders einfach zu dimensionieren.

Um bei gleicher Bauhöhe des Verbrennungsmotors die Pleuelstange zu verlängern und somit die Federcharakteristik durch voluminösere Fluidräume zu verbessern, wird es als vorteilhaft gesehen, das kurbelzapfenseitige Pleuelteil bis in einen Bereich innerhalb des Kolbengelenkelementes zu führen. Der Pumpraum kann bis unter den Kolbenboden verlängert werden und dadurch das eingeschlossene Ölvolumen erheblich vergrößert werden. Der Druckkolben ist auf dem Außendurchmesser des Hohlkörpers geführt, wodurch die Druckfläche vergrößert ist. Auf diese Weise wird die Kolbenkraft des Verbrennungsmotors mit geringen, die Bauteile belastenden Öldrücken abgefedert übertragen. Alle druckbelasteten Bauteile können schwächer und damit leichter ausgebildet werden, was die Herstellung der Pleuelstange kostengünstiger macht. Das Kolbengelenkelement überträgt keine Kraft auf die Pleuelstange, da die Kolbenkraft direkt über den Kolbenboden auf das Drucköl im Pumpraum wirkt. Das Kolbengelenkelement hat nur Führungs- und Dichtungsfunktion.

Treten funktionsbedingt relativ hohe Leckölanteile auf, so ist es vorteilhaft, die Pleuelstange so auszubilden, daß der Hohlraum über eine Ölbohrung im Kurbelzapfenauge mit einer Kurbelzapfenlagertasche und der Pumpraum über eine Ölbohrung im Kolbenbolzenauge mit einer Kolbenbolzenlagertasche verbunden ist, wobei die Druckölversorgung durch eine Druckleitung in der Kurbelwelle erfolgt. Um ein Rückfließen des Drucköls aus dem Hohlraum zu verhindern, ist ein Rückschlagventil in der Druckleitung vorgesehen. Besonders vorteilhaft ist das Rückschlagventil in der Grundplatte des Hohlkörpers angeordnet. Dabei sind die Kolbenbolzenlagertasche und die Kurbelzapfenlagertasche in Form einer schmalen Nut ausgebildet, die sich bogenförmig über einen Winkel von ca. 130° erstreckt, so daß die druckbeaufschlagte Fläche der Lagertaschen geringer ist als die Querschnittsfläche des Druckkolbens. Durch diese Ausbildung wird auf überraschend einfache Weise der Hohlraum bei Auftreten eines Stoßes selbsttätig fluidisch abgedichtet, so daß die Federwirkung des Fluids in vollem Umfang genutzt werden kann.

Für besonders langhubige Hubkolbenmaschinen ist es von Vorteil, wenn der dem Kurbelzapfen zugeordnete Pleuelteil wesentlich länger als der dem Kolben zugeordnete Pleuelteil ist, wodurch eine hohe Knicksicherheit der Pleuelstange nach der Erfindung erreicht wird.

Durch die erfindungsgemäße Ausbildung ist eine, die Energie von Druckspitzen auf den Kurbeltrieb übertragende Pleuelstange geschaffen, mit der die Kinematik des Kurbeltriebes nicht für die Verbrennung nachteilig beeinflußt wird. Die geometrische Zuordnung bleibt soweit erhalten, daß das erfindungsgemäße Pleuel kinematisch sich wie ein steifes Pleuel verhält, aber die Energie der Druckspitze sanft auf die Lagerungen überträgt. Diese Energieausnutzung und die ausgeglichene Belastung erhöht den Wirkungsgrad, die Lebensdauer und die Laufkultur entscheidend. Weiter erfolgt eine sich selbsttätig den Betriebszuständen anpassende Veränderung der Verdichtung. Bei entsprechender Auslegung der geometrischen, temperatur- und lastabhängigen Längenänderung der Pleuelstange nach der Erfindung kann auf besonders einfache Weise die Verdichtung für eine optimale Treibstoffausnutzung und schadstoffarme Verbrennung systemimmanent angepaßt werden. Durch das ausgewogene kinematische Verhalten des Kurbeltriebes können ferner die Wartungsintervalle weiter verlängert werden. Auch ist bei einer Pleuelstange mit einer Fluidfeder die Eigenfrequenz so hoch, daß ein unter kritischer Betrieb möglich ist. Mit der Erfindung steht somit eine universell für Hubkolbenmaschinen aller Art einsetzbare Pleuelstange zur Verfügung, die Druckspitzen zeitgedehnt auf den Kurbeltrieb überträgt und darüber hinaus die Grundlage für eine weitere Schadstoffreduzierung bei Otto- und Dieselmotoren schafft.

Ausführungsbeispiele der Erfindung sind nachstehend anhand der Zeichnung näher erläutert. In der Zeichnung zeigt:
- Fig. 1: eine teilweise aufgebrochene Ansicht einer Pleuelstange nach der Erfindung mit einem einstufigen fluidischen Kraftspeicher und einem Verzögerungsglied und
- Fig. 2: eine teilweise aufgebrochene Ansicht einer Pleuelstange mit einem zweistufigen fluidischen Kraftspeicher mit zugeordneten Dämpfungsgliedern, wobei rechtsseitig der Zustand der ersten Stufe und linksseitig der Zustand der zweiten Stufe gezeigt sind,
- Fig. 3: eine aufgebrochene Teilansicht einer Pleuelstange mit einem zweistufigen fluidischen Kraftspeicher mit schwenkbeweglich gelagertem Kolben, wobei das kurbelzapfenseitige Pleuelteil sich bis in den Bereich des Kolbengelenkelementes erstreckt, welches als Kolbenbolzen ausgeführt ist,
- Fig. 4: eine aufgebrochene Ansicht einer Pleuelstange gemäß Fig. 3, wobei das Kolbengelenkelement zur schwenkbeweglichen Lagerung des Kolbens als Kugelgelenk ausgeführt ist,
- Fig. 5: eine teilweise aufgebrochene Teilansicht eines kurbelzapfenseitigen Pleuelteils nach der Erfindung mit einem einstufigen fluidischen Kraftspeicher,
- Fig. 6: eine teilweise aufgebrochene Teilansicht eines kurbelzapfenseitigen Pleuelteils nach der Erfindung mit einem zweistufigen fluidischen Kraftspeicher.

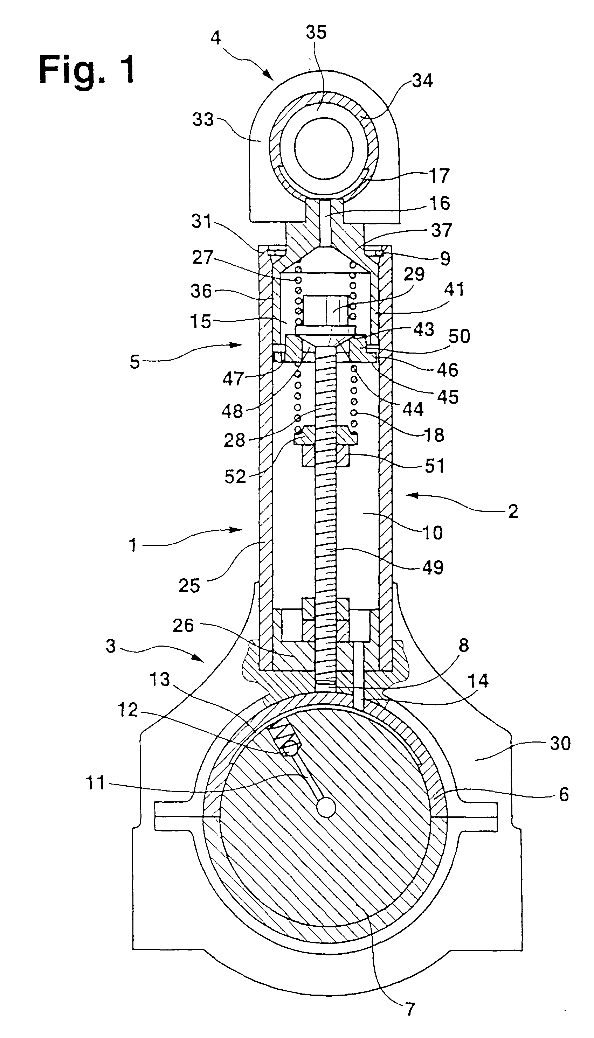

In Fig. 1 ist eine zweiteilige Pleuelstange 1 gezeigt, die einen einstufigen Kraftspeicher in Form einer Fluidfeder 2 aufweist. Die Pleuelstange 1 weist einen ersten, dem Kurbelzapfen zugeordneten Pleuelteil 3 und einen dem Kolben der Hubkolbenmaschine zugeordneten, vom Kolbenbolzen durchsetzten Pleuelteil 4 auf. Der Fluidfeder 2 ist ein in deren Zugrichtung fluidisch wirksames Verzögerungsglied 5 innerhalb des Pleuelteils 3 zugeordnet.

Der kurbelzapfenseitige Pleuelteil 3 weist an einem Ende ein Kurbelzapfenauge 30 auf, das ein- oder zweiteilig ausgebildet sein kann und ein Kurbelzapfenlager 6 trägt, das einen Kurbelzapfen 7 der nicht dargestellten Kurbelwelle drehgelenkig umschließt. Der Pleuelteil 3 ist als länglicher, einen Hohlraum 10 bildender Hohlkörper 25 runden Querschnitts geformt, dessen Länge wesentlich größer als die des anderen Pleuelteils 4 ist. Ein Ende des Pleuelteils 3 bildet ein im Bereich des Kurbelzapfenauges 30 angeordneter Hohlkörpergrund 26 und das andere Ende ein Pleuelhals 31. Am Hohlkörpergrund 26 ist eine Ölbohrung 14 angeordnet, die in eine Kurbelzapfenlagertasche 13 des Kurbelzapfenlagers 6 mündet. Die Kurbelzapfenlagertasche 13 ist eine schmale, radiale Ausnehmung in dem Kurbelzapfenlager 6, die ein Segment umspannt, das dem Kolben zugewandt ist. Die Ausnehmung ist im Kurbelzapfenlager mittig angeordnet.

Der Pleuelteil 4 ist als Druckkolben 41 ausgebildet, der an einem Ende ein dem Kolben der Hubkolbenmaschine zugeordnetes Kolbenbolzenauge 33 aufweist, in dem ein Kolbenbolzen 35 mittels eines Kolbenbolzenlagers 34 schwenkbar gelagert ist. Am anderen Ende weist der Druckkolben 41 eine Schiebepassung 36 auf, die zum Kolbenbolzenauge 33 hin einen Druckkolbenhals 37 bildet. Innerhalb des Druckkolbens 41 ist ein Pumpraum 15 vorgesehen, von dem aus eine Ölbohrung 16 in eine Kolbenbolzenlagertasche 17 des Kolbenbolzenlagers 34 mündet. Die Kolbenbolzenlagertasche 17 ist eine schmale, radiale Ausnehmung in dem Kolbelbolzenlager 34, die ein Segment umspannt, das dem Kurbelzapfen 7 zugewandt ist. Die Ausnehmung ist im Kolbenbolzenlager 34 mittig angeordnet.

Die Taschen 13 und 17 sind so bemessen, daß ihre Fläche jeweils kleiner ist als die fluidisch wirksame Querschnittsfläche des Druckkolbens 41. Ferner ist das Segment jeweils kleiner als 170° - symmetrisch zur Pleuelstangenlängsachse betrachtet - vorzusehen, damit ein lastabhängiger Selbstdichtungseffekt der Fluidfeder durch den Kolbenbolzen und den Kurbelzapfen beim Zusammendrücken der Pleuelstange entsteht. Im Ausführungsbeispiel beträgt der Winkel ca. 130°.

In dem dem Kurbelzapfenauge 30 abgewandten Pleuelhals 31 des Pleuelteils 3 ist der Pleuelteil 4 mittels der Schiebepassung 36 axial verschieblich gelagert. Am Ende des Pleuelhalses 31 ist ein Anschlag 9 in Form eines in einer Ringnut eingelegten Federrings vorgesehen, an dem der Druckkolben 41 mit seinem Druckkolbenhals 37 anliegt und die maximale Pleuelstangenlänge definiert.

In ein am Hohlkörpergrund 26 zentrisch zum Hohlraum 10 liegendes Gewinde 8 greift ein Gewinde 49 eines in dem Gewinde 8 axial einstellbaren Ankers 28, dessen Lage mittels einer Kontermutter 51 feststellbar ist. Der Ankerkopf 29 reicht in den Pumpraum 15 des Druckkolbens 41. An dem Ankerkopf 29 stützt sich eine Druckfeder 27 ab, die den Druckkolben in Anlage mit dem Anschlag 9 hält.

Der Hohlraum 10 des Kraftspeichers 2 wird mit Öl aus dem nicht dargestellten Öldrucksystem der Hubkolbenmaschine über eine in dem Kurbelzapfen 7 radial austretende, von einem Rückschlagventil 12 gegen Rückfluß gesicherte Druckölleitung 11 während des Anlaßvorganges der Hubkolbenmaschine befüllt und während des Betriebes entsprechend der aus dem Kolbenbolzenlager 34 und dem Kurbelzapfenlager 6 sowie aus der Schiebepassung 36 austretenden Leckölmenge nachversorgt.

Die Druckölleitung 11 ist im umlaufenden Kurbelzapfen 7 so angeordnet, daß diese die Kurbelzapfenlagertasche 13 erreicht, wenn die Fluidfeder entspannt ist.

Der Anker 28 weist eine in den Hohlraum 10 weisende Dichtungsfläche 44 auf, die in Wirkverbindung mit der, aus dem Hohlraum weisenden Dichtungsfläche 43 einer Scheibe 50 steht. Die Scheibe 50 weist zentrisch eine Bohrung 48 auf, durch die der Anker 28 greift. Die Scheibe 50 ist von einer dem Anker 28 zugeordneten, in ihrer Vorspannung mittels eines auf dem Gewinde 49 des Ankers 28 axial verstellbaren Federsitzes 52 einstellbaren Druckfeder 18 mit ihrer Dichtfläche 43 gegen die Dichtfläche 44 des Ankers 28 dicht schließend gehalten. Zwischen der Scheibe 50 und der Innenwandung des Hohlkörpers 25 ist ein Überströmspalt 46 in Form eines schmalen, umlaufenden Spaltes vorgesehen. Zusätzlich oder alternativ können den Pumpraum 15 mit dem Hohlraum 10 verbindende Überströmbohrungen 47 vorgesehen werden, wenn die Federcharakteristik dies erfordert.

Beim Zusammendrücken der Pleuelstange 1 durch den Druckkolben 41 baut sich rasch gleicher Druck im Pumpraum 15 und Hohlraum 10 auf, da das Volumen des Pumpraumes in der Regel kleiner ist als das des Hohlraumes 10. Dadurch wird schnell ein der Energiemenge der Druckspitze proportionales Teilvolumen aus dem Pumpraum 15, vorbei am Ankerkopf 29, in den Hohlraum 10 gefördert.

Die Scheibe 50 unterteilt die Fluidfeder in zwei Räume 10 und 15 mit jeweils unterschiedlich großen Volumina. Beim anschließenden Nachlassen des äußeren Drucks auf die Pleuelstange 1 verringert sich zunächst auch der Druck im Pumpraum 15, der dann einen zeitgedehnten Rücklauf des Teilvolumens vom Hohlraum 10 in den Pumpraum 15 auslöst, wobei das Öl gedrosselt durch den Überströmspalt 46 am äußeren Umfang der Scheibe 50 fließt.

Durch Bemessung der Volumina aller federnd wirksamen Hohlräume kann unter Berücksichtigung der physikalischen Eigenschaften des Öls auf einfache Weise die Verzögerungscharakteristik vorbestimmt werden. Dazu wird der wirksame Querschnitt des Überströmspaltes 46 bzw. der Überströmbohrung 47 derart bemessen, daß das während des Zusammendrückens der Pleuelstange 1 von dem Pumpraum 15 in den Hohlraum 10 gepumpte Teilvolumen innerhalb einer entsprechend der Drehfrequenz der Hubkolbenmaschine vorgegebenen Zeitspanne vor Erreichen des erneuten Zusammendrückens der Pleuelstange aus dem Hohlraum 10 ohne große Druckverluste wieder in den Pumpraum 15 zurückfließen kann. Ein schnelleres Zurückfließen wird jedoch behindert und dadurch ein Eigenschwingen des Volumenmasse-Ölfeder-Systems vermieden.

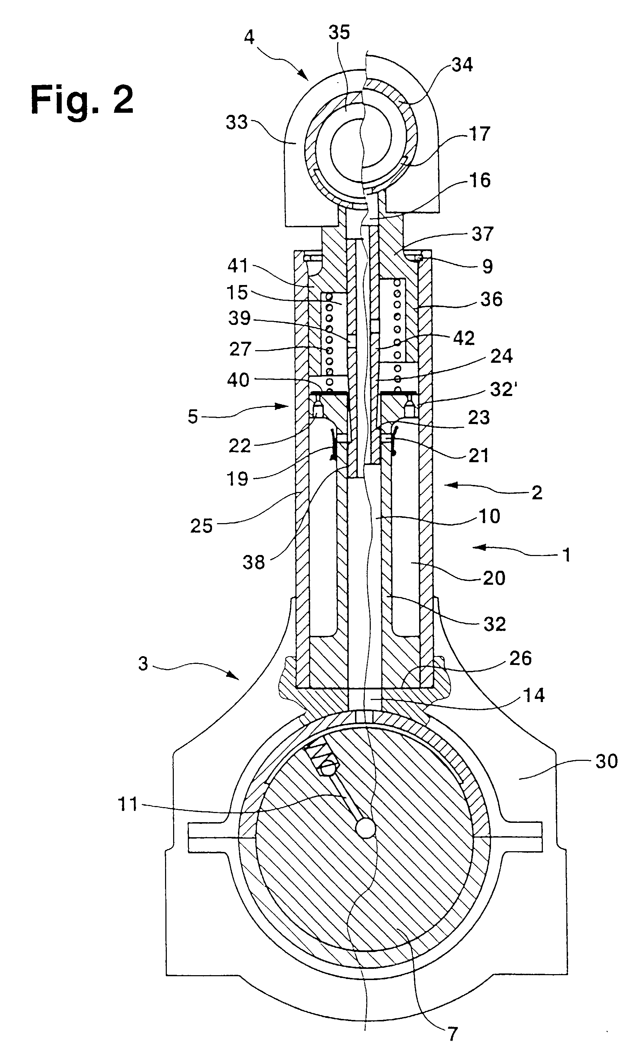

In Fig. 2 ist eine Pleuelstange 1 mit einer zweistufigen Fluidfeder 2 gezeigt, die durch einen ersten, dem Kurbelzapfen zugeordneten Pleuelteil 3 und einen- dem Kolben der Hubkolbenmaschine zugeordneten Pleuelteil 4 gebildet wird.

Da die Pleuelteile 3 und 4 im wesentlichen gleichen Aufbau - wie die bereits in Fig. 1 beschrieben - aufweisen, werden gleiche Teile mit gleichen Bezugsziffern benannt.

In dem Hohlraum 10 des Pleuelteils 3 ist anstelle des Ankers ein Innenrohr 32 vorgesehen, das fest mit dem Hohlkörpergrund 26 verbunden ist und einen konzentrisch den ersten Hohlraum 10 umgebenden zweiten Hohlraum 20 formt. Am oberen Ende weist das Innenrohr 32 einen radialen Bund 32' auf, der an dem Hohlkörper dichtend anliegt und den Pumpraum 15 vom zweiten Hohlraum 20 trennt. Durch die Ausgestaltung der Pleuelstange mit den konzentrischen Druckräumen wird eine gleichmäßige Druckverteilung auf den Hohlkörper 25 erreicht, so daß bei längeren Pleuelstangen keine druckbedingte unsymmetrische Verformung eintritt. Der Pumpraum 15 steht mit dem zweiten Hohlraum 20 mittels in dem Innenrohr 32 eingebrachter Öffnungen 21 in fluidischer Wirkverbindung.

Der Druckkolben 41 ist von einer sich an dem Innenrohr 32 abstützenden Druckfeder 27 mit dem Druckkolbenhals 37 gegen einen Anschlag 9 im Bereich des Pleuelhalses 31 des dem Kurbelzapfen 7 zugeordneten Pleuelteils 3 gehalten. Ferner weist der Druckkolben 41 einen axial einstellbaren, den Pumpraum 15 durchsetzenden Schieber 42 auf, der den Hohlraum 10 vom Pumpraum 15 trennt. Der Pumpraum 15 ist über Öffnungen 39 im Schieber 42 mit dem ersten Hohlraum 10 fluidisch verbunden. Am innerseitigen Ende des Schiebers 42 ist eine die Öffnung 21 abdeckende Schiebepassung 38 vorgesehen. Am Schieber 42 ist vor der Schiebepassung eine umlaufende Steuerkante 23 vorgesehen, die bei axialer Verschiebung des Druckkolbens 41 die Öffnungen 21 freigibt und den zweiten Hohlraum 20 fluidisch dem Pumpraum 15 zuschaltet.

Über die in das Kurbelzapfenlager 6 führende Ölbohrung 14 im Kurbelauge 30 wird über die Druckleitung 11 des Druckölschmiersystems in dem Kurbelzapfen 7 der Hohlraum 10 und über die Ölbohrung 16 das Kolbenbolzenlager 34 mit Drucköl versorgt.

Die Federkennlinie der ersten Stufe wird bestimmt durch die hydraulisch wirksame Fläche des Druckkolbens 41 im Verhältnis zu den Volumina im Pumpraum 15 und Hohlraum 10, wobei auch der Hohlraum 20 der zweiten Stufe über die Überströmbohrung 22 einen zusätzlichen Einfluß hat.

Die Querschnitte der Öffnungen 21 sind so groß gewählt, daß möglichst keine Strömungsverluste durch die Öffnung selbst erzeugt werden. Die Federkennlinie der zweiten Stufe wird daher bestimmt durch die hydraulisch wirksamen Flächen des Druckkolbens 41 im Verhältnis zum Volumen im Pumpraum 15 und dem Gesamtvolumen der Hohlräume 10 und 20. Eine stark progressive Federkennlinie der zweiten Stufe wird erzielt, wenn der Schieber 42 einen zum Pumpraum 15 hin auslaufenden und zur Steuerkante 23 sich hin verjüngenden, in den ersten Hohlraum 10 ragenden Konus 24 aufweist.

Bei zunehmendem Eintauchen des Schiebers 42 in den Hohlraum 10 reduziert sich der fluidisch wirksame Durchströmquerschnitt zwischen Pumpraum 15 und zweitem Hohlraum 20 durch den Konus 24, so daß bei zunehmendem Federweg der Durchflußquerschnitt geringer wird. Hierdurch kann ein Überschwingen des Druckkolbens 41 über den Gleichgewichtspunkt zwischen Verbrennungsdruck einerseits und Fluidfeder andererseits verringert oder gar vermieden werden. Ist keine progressive Überschwingdämpfung erwünscht, kann dies einfach dadurch vermieden werden, daß der konische Abschnitt zylindrisch ausgebildet ist.

Die Öffnungen 21 und Verbindungsbohrungen sind so dimensioniert, daß sie die Strömung nicht behindern und auf diese Weise widerstandsfreie Verbindungen vom Hohlraum 10 bzw. dem Pumpraum 15 sowie nach Freigabe durch die Steuerkante 23 zu dem zweiten Hohlraum 20 schaffen. Solange das Pleuel kürzer wird, fließt Öl durch die Öffnungen 21 vom Pumpraum 15 in den zweiten Hohlraum 20, und zwar zwischen dem Konus 24 und dem inneren Rand des Innenrohres 32 hindurch. Der Konus soll dabei lediglich ein übermäßiges Eintauchen des Druckkolbens 41 durch seine kinetische Energie über den Punkt des Ausgleichs der statischen Kräfte hinaus durch Abdrosseln des Zuflusses zum zweiten Hohlraum 20 verhindern.

Zur Vermeidung einer zu schnellen Entspannung des Öls im Hohlraum 20 wird das Rückschlagventil 19 durch den im Hohlraum 20 herrschenden Druck geschlossen und es erfolgt der Druckausgleich des zweiten Hohlraumes 20 ausschließlich durch die Überströmbohrung 22 in den Pumpraum 15, wobei neben der Drosselwirkung der Überströmbohrung 22 auch die auf das Rückschlagventil 40 wirkende Druckfeder 27 einen Einfluß ausübt, so daß die weit über der Motordrehfrequenz liegenden Resonanzschwingungen zusammen mit den an dem Kolben 41 anhängenden Massen gedämpft werden; die Übertragung der in der Fluidfeder gespeicherten Energie auf den Kurbeltrieb erfolgt ungedämpft (Phase der Energieabgabe).

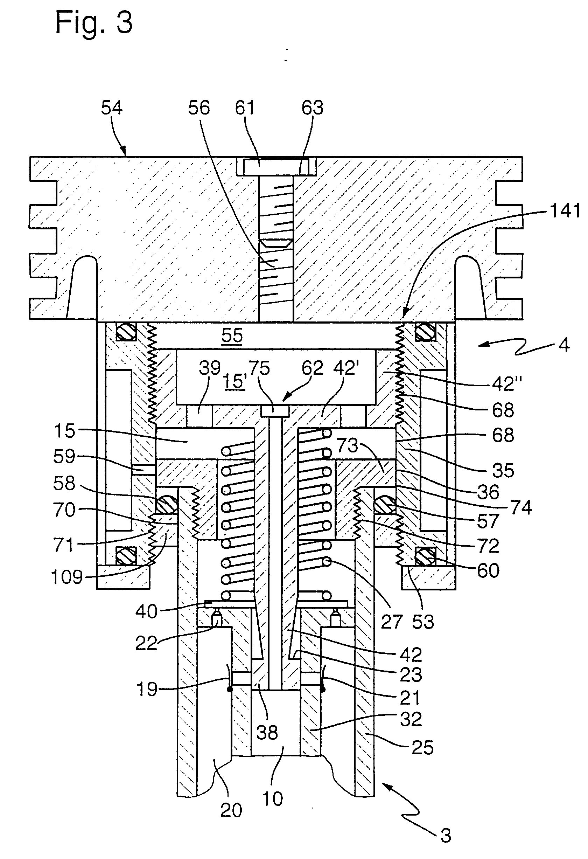

Fig. 3 zeigt einen kolbenseitigen Abschnitt einer vorteilhaften Ausgestaltung einer Pleuelstange mit einer zweistufigen Fluidfeder, wie sie in ähnlicher Form bereits in Fig. 2 beschrieben ist.

Ein Kolben 54 ist mit einem Lager 53 schwenkbeweglich über ein Kolbengelenkelement mit dem kolbenseitigen Pleuelteil 4 verbunden. Das Kolbengelenkelement ist als Kolbenbolzen 35 ausgeführt, welcher von einer zylindrischen Öffnung durchsetzt ist, in die der Endabschnitt des kurbelzapfenseitigen Pleuelteils 3 hineingeführt ist. Durch die Verlängerung des kurbelzapfenseitigen Pleuelteils 3 bei einer gegebenen Bauhöhe des Hubkolbenmotors sind geringere Schwenkwinkel der Pleuelstange erreicht, wodurch die Reibungsverluste des in einem Zylinder auf und ab gehenden Kolbens 54 reduziert sind.

In den Endabschnitt des Hohlkörpers 25 des kurbelzapfenseitigen Pleuelteils 3 ist mittels eines Gewindes 72 ein Einsatzstück 73 eingeschraubt, welches eine nach außen gerichtete Ringschulter 74 bildet, die das Außenmaß des Querschnittes des Hohlkörpers 25 überragt. Die Umfangsfläche der Ringschulter ist als Schiebepassung 36 ausgebildet und führt den Kolbenbolzen 35. Das Einsatzstück 73 ist von dem Schieber 42 durchsetzt, welcher wie in Fig. 2 beschrieben die Verbindung der Fluidräume steuert. Der Schieber 42 weist an dem oberen Ende eine radiale Wand 42' auf, welche den Pumpraum 15 und einen erweiterten Pumpraum 15' trennt, welcher zwischen der radialen Wand 42' und dem Kolbenboden 55 liegt. Die Pumpräume 15 und 15' kommunizieren fluidisch über in die radiale Wand 42' axial eingebrachte Öffnungen 39 sowie über eine den Schieber 42 axial durchsetzende Öffnung 62. Ein sich an die radiale Wand 42' anschließender zylindrischer Abschnitt 42" trägt an seinem Umfang ein Schiebergewinde 68, mit dem der Schieber 42 axial verstellbar kolbenseitig in die den Kolbenbolzen 35 durchsetzende Öffnung eingeschraubt ist. Die axiale Verstellung des Schiebers 42 und damit die Änderung der Federcharakteristik der Fluidfeder kann in zusammengebautem Zustand des Hubkolbenmotors auf einfache Weise vorgenommen werden, indem aus dem Zylinderraum durch eine zentrische Montagebohrung 56 im Kolben 54 ein Drehwerkzeug in eine Werkzeugaufnahmevertiefung 75 im kolbenseitigen Endabschnitt der Bohrung 62 eingeführt ist. Die Montagebohrung 56 ist von einer Schraube 61 gegebenenfalls unter Zwischenschaltung einer Dichtung 63 verschlossen.

Der Druckkolben 141 ist als gemeinsames Bauteil mit dem Kolben 54 und dem Kolbenbolzen 35 ausgebildet und ist im pleuelseitigen Endabschnitt der Kolbenbolzenöffnung von einem Anschlagring 109 gegen die Ringschulter 74 gehalten. Der Anschlagring 109 ist mit einem Anschlaggewinde 71 in die Öffnung des Kolbenbolzen 35 eingeschraubt. Der Innendurchmesser des Anschlagringes 109 ist als Schiebepassung 70 ausgebildet, wodurch der Druckkolben 141 auf dem Außendurchmesser des Hohlkörpers 25 geführt ist, wobei die Schiebepassung 70 ausreichend eng zu einer fluidischen Abdichtung ausgebildet ist. Die Ringschulter 74 und der Anschlagring 109 begrenzen einen Zwischenraum 57, in dem ein Elastomerring 58 angeordnet ist. Der Elastomerring 58 dämpft den Anschlag des Druckkolbens 141 gegen die Ringschulter 74 und verbessert weiterhin die fluidische Dichtung des Zwischenraumes 57.

Steigt der Öldruck in den Pumpräumen 15 und 15' infolge einer Einfederung der Fluidfeder, so ist vorgesehen, daß Drucköl über die Schiebepassung 36 des Einsatzstückes 73 in den sich erweiternden Zwischenraum 57 gelangt. In den Druckkolben 141 ist im Bereich der Schiebepassung 36 des Einsatzstückes 73 durch die Stirnwand des Kolbenbolzens 35 eine Ölbohrung 59 eingebracht, welche bei Einfederung der Fluidfeder von einer Steuerkante der Ringschulter 74 freigegeben wird und den sich erweiternden Zwischenraum 57 fluidisch mit dem Innenraum des Kurbelgehäuses der Hubkolbenmaschine verbindet.

Beim Ausfedern der Fluidfeder kann das Öl, das sich in dem sich jetzt verkleinernden Zwischenraum 57 angesammelt hat, über die Öffnung 59 in den Motorraum abfließen. Wenn aber beim weiteren Ausfedern die Öffnung 59 von der Steuerkante der Ringschulter 74 überfahren und dadurch von der Außenfläche des Einsatzstückes 73 abgedeckt wird, dann kann das Öl aus dem sich verkleinernden Zwischenraum 57 bei entsprechend hohem Druck nur über die Schiebepassung 36 wieder in den Pumpraum 15' zurückfließen, weil der Elastomerring 58 ein Abfließen durch den Schiebesitz 70 des Anschlagringes 109 oder das Anschlaggewinde 71 verhindert. Der hohe Druck im Zwischenraum 57 bremst das Ausfedern der Fluidfeder und dämpft damit die Annäherung des Einsatzstückes 73 an den Elastomerring 58 und den Anschlagring 109.

Das aus der Öffnung 59 in den Motorölraum entlassene Öl wird über die Druckölpumpe des Druckölschmiersystems der Fluidfeder wieder zugeführt. Dadurch ist bei den Beispielen nach Fig. 1 und Fig. 2 für eine Auffrischung des Fluidfederöls gesorgt. Der Kolbenbolzen 35 weist auf seinem Umfang benachbart der Stirnseiten im Bereich der Lagerschalen 53 Nuten zur Aufnahme von Dichtringen 60 auf, um ein axiales Austreten des den Kolbenbolzen schmierenden Fluidfederöls aus dem Pumpraum 15' zu verhindern.

Diese besonders vorteilhafte Ausgestaltung einer erfindungsgemäßen Pleuelstange mit einer zweistufigen Fluidfeder ermöglicht es, die Bauhöhe, das Bauvolumen und das Gewicht der Hubkolbenmaschine zu verringern. Da das kolbenseitige Pleuelteil 4 mit seinem Druckkolben 141 den Hohlkörper 25 des kurbelzapfenseitigen Pleuelteils 3 umgreift, ist die wirksame Druckfläche des Druckkolbens 141 vergrößert, nämlich auf den die den Kolbenbolzen 35 durchsetzende Öffnung abdeckenden Abschnitt des Kolbenbodens 55. Der Pumpraum 15 ist um einen zusätzlichen Pumpraum 15' erweitert und bis unter den Kolbenboden 55 verlängert, wodurch das eingeschlossene Ölvolumen erheblich vergrößert ist. Somit wird die Kolbenkraft der Hubkolbenmaschine mit geringen Öldrücken übertragen, und die Federwege der Fluidfeder sind kurz, wodurch das Gesamtsystem eine hohe Eigenfrequenz aufweist, die weit über der Kolbendrehfrequenz der Hubkolbenmaschine liegt.

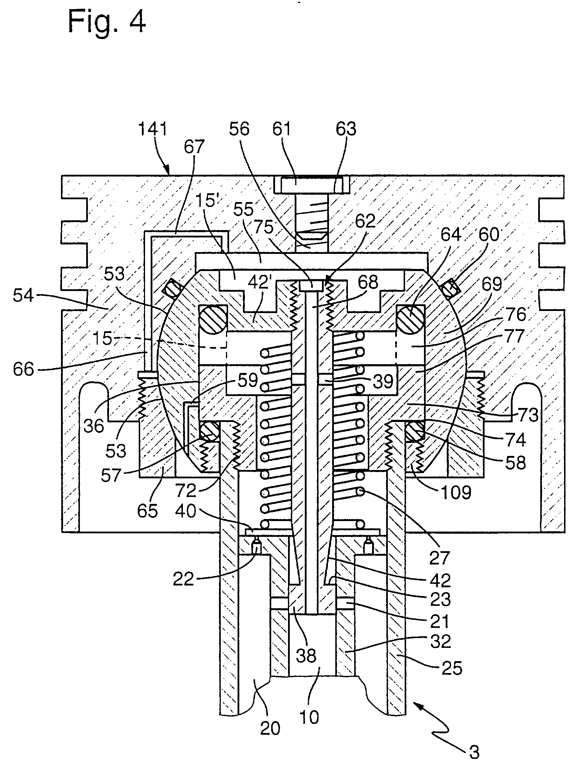

Fig. 4 zeigt aufgebrochen einen kolbenseitigen Abschnitt einer erfindungsgemäßen Pleuelstange mit einer zweistufigen Fluidfeder, die durch einen dem Kurbelzapfen zugeordneten Pleuelteil 3 und einen dem Kolben der Hubkolbenmaschine zugeordneten Pleuelteil gebildet ist, mit einem bis in das Kolbengelenkelement 69 geführten Hohlkörper 25 des kurbelzapfenseitigen Pleuelteils 3, wie es in Fig. 3 beschrieben ist, wobei das Kolbengelenkelement 69 als Kugelgelenk ausgeführt ist.

Da die Pleuelteile im wesentlichen den gleichen Aufbau wie bereits beschrieben aufweisen, werden äquivalente Teile mit gleichen Bezugsziffern benannt.

Ein Kolben 54 ist als zur Pleuelstange hin offener Hohlkörper ausgebildet, welcher eine sphärisch ausgeformte Lagerschale 53 zur schwenkbeweglichen Aufnahme eines kugelschichtig ausgestalteten Gelenkkopfes 69 umfaßt. Die Lagerschale 53 ist äquatorial geteilt, wobei die pleuelseitige Hälfte der Lagerschale auf der Innenseite eines Spannringes 65 angeordnet ist, welcher in den Kolben 54 geschraubt den ein- oder mehrteilig ausgeführten Gelenkkopf 69 schwenkbeweglich fixiert. Der Gelenkkopf 69 umfaßt einen den Pumpraum 15 bildenden, zum kurbelzapfenseitigen Pleuelteil 3 gerichtet offenen zylindrischen Raum, in den der Hohlkörper 25 des kurbelzapfenseitigen Pleuelteils 3 hineingeführt ist.

In den Endabschnitt des Hohlkörpers 25 ist ein Einsatzstück 73 eingeschraubt, welches eine nach außen gerichtete Ringschulter 74 bildet, die das Außenmaß des Querschnittes des Hohlkörpers 25 überragt und mit der auf der Umfangsfläche der Ringschulter 74 ausgebildeten Schiebepassung 36 den Gelenkkopf 69 - ebenso wie in Fig. 3 - längsbeweglich führt. Der Pumpraum 15 ist von einer einteilig an dem Gelenkkopf 69 angeformten radialen Wand 42' begrenzt, welche zentrisch mittels eines Schiebergewindes 68 mit einem den Pumpraum 15 durchsetzenden Schieber 42 schraubverbunden ist. Die Ausgestaltung des Schiebers 42 ist im wesentlichen den Beschreibungen zu den Zeichnungsfiguren 2 und 3 entnehmbar.

Im radial äußeren Bereich weist die Wand 42' eine zum Einsatzstück 73 offene Aussparung 76 auf, in der ein Elastomerring 64 angeordnet ist. Das Einsatzstück 73 weist im radial äußeren Bereich einen der Kontur der radialen Wand 42' folgenden ringförmigen Vorsprung 77 auf, welcher bei einem Ineinanderschieben der Pleuelteile 3 und 4 in die Aussparung der Wand 42' eingeführt ist. Ist der Federweg der Fluidfeder geringfügig zu weit eingestellt, so wird die Bewegung des Druckkolbens 141 durch den Elastomerring 64 gepuffert.

Zwischen der radialen Wand 42' und dem Kolbenboden 55 ist ein erweiterter Pumpraum 15' begrenzt, welcher über die den Schieber 42 durchsetzende Öffnung 62 und über radiale Öffnungen 39 im Schieber 42 mit dem Pumpraum 15 und mit dem Hohlraum 10 des kurbelzapfenseitigen Pleuelteils 3 fluidisch kommuniziert. Der Kolbenboden 55 weist eine Entlüftungsöffnung 67 auf, welche über einen Entlüftungskanal 66 mit der äquatorialen Trennstelle der Lagerschale 53 verbunden ist. Dabei leitet der Entlüftungskanal 66 dem Lager des Gelenkkopfes 69 Druckschmieröl aus dem erweiterten Pumpraum 15' zu.

Die Rückführung des Druckschmieröls aus den Fluidräumen der Pleuelstange in den Kreislauf des Druckschmierölsystems der Hubkolbenmaschine ist wie zu Fig. 3 beschrieben vorgesehen. Dabei wird Drucköl aus einem Zwischenraum 57 durch eine von der Ringschulter 74 des Einsatzstückes 73 freigebbare, L-förmig verlaufende Ölbohrung 59 im Gelenkkopf 69 in einen zwischen dem Spannring 65 und dem Hohlkörper 25 begrenzten Bereich in den Kurbelgehäuseraum geleitet. Der Drucköldurchsatz der Pleuelstange ist durch den Drosselquerschnitt der Öffnung 67 einstellbar, wodurch auch eine Kühlung des Kolbenbodens 55 erreicht ist. Das Schmieröl des dem Spannring 65 zugeordneten Teils des Lagers 53 tritt benachbart der Ölbohrung 59 im Gelenkkopf 69 in das Kurbelgehäuse aus. In dem Bereich der kolbenseitigen Kugelschichthälfte des Gelenkkopfes 69 ist durch die Lagerschale 53 in dem Kolben 54 eine Aussparung zur Aufnahme eines Dichtringes 60 angeordnet.

Durch die kugelgelenkgemäße schwenkbewegliche Lagerung des Kolbens 54 auf der Pleuelstange ist das Gewicht der Hubkolbenmaschine reduziert, da der kugelschichtförmige Gelenkkopf 69 leichter ist als ein Kolbenbolzen 35 in einem Kolbengelenk, wie es zu Fig. 3 beschrieben ist. Die Schwenkachse des kugelschichtigen Gelenkkopfes 69, welche durch den größten Durchmesser des Lagers 53 definiert ist, liegt näher an dem Kolbenboden 55, wodurch eine weitere Verlängerung des kurbelzapfenseitigen Pleuelteils 3 erreicht ist. Der leichte Kolben folgt der Gaskraft im Zylinder der Hubkolbenmaschine schneller. Die Verlängerung des kurbelzapfenseitigen Pleuelteils 3 erzielt geringere Schwenkwinkel des Kolbengelenkes und damit eine geringere Schrägstellung der Pleuelstange. Dadurch verringert sich die Anpreßkraft des Kolbens 54 an die Zylinderwand und als Folge davon die Reibung des Kolbens 54 im Zylinder, wodurch geringere Massenkräfte auftreten und die Eigenfrequenz des Kolben-Fluidfeder-Systems erhöht ist gegenüber der Drehfrequenz der Kurbelwelle.

Die in Fig. 3 und Fig. 4 gezeigte Verlängerung des kurbelzapfenseitigen Pleuelteils 3 in das dem kolbenseitigen Pleuelteil 4 zugeordnete Kolbengelenkelement bei einer Pleuelstange mit einer zweistufigen Fluidfeder kann auch bei einer erfindungsgemäßen Pleuelstange mit einer einstufigen Fluidfeder verwirklicht sein.

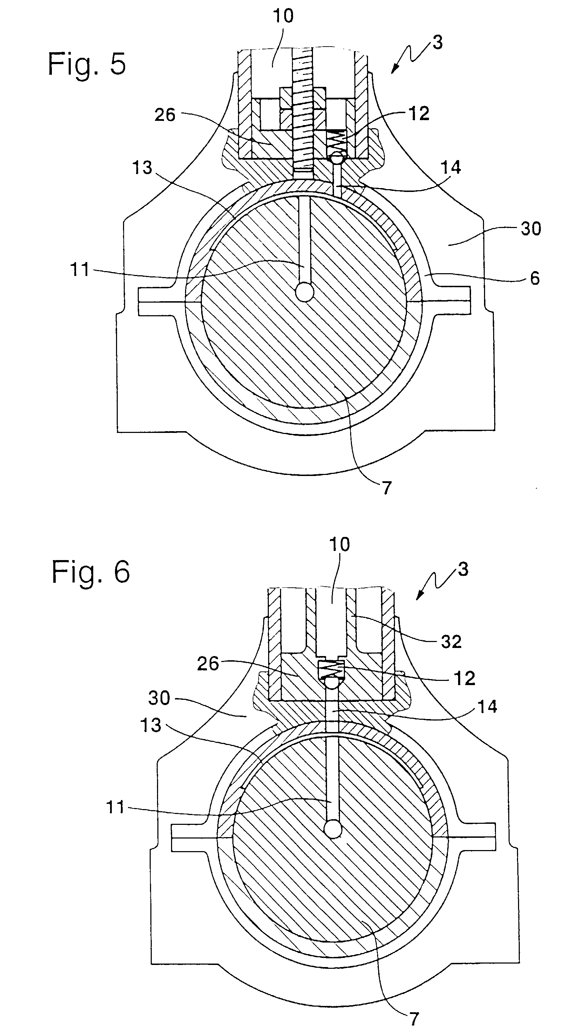

Fig. 5 zeigt in einer teilweise aufgebrochenen Teilansicht des kurbelzapfenseitigen Pleuelteils 3 einer Pleuelstange mit einer einflutigen Fluidfeder eine vorteilhafte Anordnung eines Rückschlagventils 12, welches den Rückfluß von Drucköl aus dem Hohlraum 10 verhindert. Die Druckölzufuhr in den Hohlraum 10 aus dem nicht dargestellten Öldrucksystem der Hubkolbenmaschine erfolgt weitgehend wie zu Fig. 1 beschrieben über eine radiale Druckölleitung 11 in dem Kurbelzapfen 7 und eine ein Kurbelzapfenlager 6, ein Kurbelzapfenauge 30 und eine den Hohlraum 10 begrenzende Grundplatte 26 durchsetzende Ölbohrung 14, wobei die Ölleitung 11 und die Ölbohrung 14 durch eine mittige Kurbelzapfenlagertasche 13 im Kurbelzapfenlager 6 fluidisch verbunden sind. Das Rückschlagventil 12 ist zwischen dem Endabschnitt der Ölbohrung 14 und dem Hohlraum 10 in die Grundplatte 26 eingebracht.

Durch die Anordnung des Rückschlagventils 12 in der Grundplatte 26 stromab der Ölbohrung 14 ist ein Leckölverlust insbesondere im Bereich der Kurbelzapfenlagertasche 13 in dem Kurbelzapfenlager 6 in der Phase hoher Drücke in den Fluidräumen der Pleuelstange vermieden.

Fig. 6 zeigt eine weitgehend der Zeichnungsfigur 5 entsprechende Anordnung des Rückschlagventils 12 in einer Pleuelstange mit einer zweistufigen Fluidfeder, wobei die Ölbohrung 14 zentrisch in die Grundplatte 26 eingebracht ist. Das Rückschlagventil 12 ist im Bereich der Grundplatte 26 in der Druckleitung 14 angeordnet, wodurch ein Rückfluß des in den von einem Innenrohr 32 begrenzten Hohlraum 10 geförderten Drucköls vermieden ist. Einem Leckölverlust im Bereich der Zuleitung vom Druckölschmiersystem der Hubkolbenmaschine in den Hohlraum 10 des Kraftspeichers der Pleuelstange wird somit begegnet.

## Patentansprüche

1. Pleuelstange zur Übertragung der Energie zwischen einem Kolben (54) und einer Kurbelwelle in einer Hubkolbenmaschine, wobei die Pleuelstange zwei in Pleuelstangenlängsrichtung relativ zueinander axial verschiebliche Pleuelteile (3, 4) aufweist, die über eine in Längsrichtung wirksame Fluidfeder (2) als Energiespeicher miteinander in Wirkverbindung stehen, wobei das kolbenseitige Pleuelteil (4) ein im Kolben aufgenommenes Schwenklager (34) zur Führung eines Kolbengelenkelementes (35, 69) und das einem Kurbelzapfen (7) der Kurbelwelle zugeordnete Pleuelteil (3) ein Kurbelzapfenlager (6) mit einem Kurbelzapfenauge (30) aufweist,
dadurch gekennzeichnet,
daß die Fluidfeder (2) als ein- oder mehrstufige Fluidfeder (2) ausgebildet ist und der Fluidfeder (2) ein in Fluidfederarbeitsrichtung wirkendes Verzögerungsglied (5) zugeordnet ist, welches die von der Fluidfeder (2) aufgenommene Energie zeitgedehnt an die Kurbelwelle abgibt, wobei die Hubkolbenmaschine ein Druckölschmiersystem aufweist und eine oder jede Stufe der Fluidfeder (2) Teil des Druckölschmiersystems der Hubkolbenmaschine ist.

2. Pleuelstange nach Anspruch 1,
dadurch gekennzeichnet, daß das Schwenklager (34) ein zylindrisches Kolbenbolzenauge (33) und einen darin schwenkbeweglich aufgenommenen Kolbenbolzen (35) umfaßt.

3. Pleuelstange nach einem der Ansprüche 1 bis 3,
dadurch gekennzeichnet, daß das Schwenklager (34) eine sphärisch ausgeformte Lagerschale (53) zur kugelgelenkgemäßen Aufnahme eines kugelschichtigen Gelenkkopfes (69) umfaßt.

4. Pleuelstange nach Anspruch 2 oder 3,
dadurch gekennzeichnet, daß der dem Kurbelzapfen (7) zu geordnete Pleuelteil (3) als einen Hohlraum (10) formender Hohlkörper (25) ausgebildet ist, der das dem Kolben zugeordnete Pleuelteil (4) führt, welches einen axial verschieblichen Druckkolben (41 oder 141) aufweist, der fluidisch dichtend einen Pumpraum (15) begrenzt, und der mittels einer Druckfeder (27) gegen einen Anschlag (9) benachbart dem Endbereich (Pleuelhals 31) des kurbelzapfenseitigen Pleuelteils (3) kraftschlüssig gehalten ist.

5. Pleuelstange nach Anspruch 4,
dadurch gekennzeichnet, daß der Druckkolben (41 oder 141) innerhalb des Hohlraums (10) angeordnet ist und mit einer Schiebepassung (36) geführt wird.

6. Pleuelstange nach Anspruch 4 oder 5,
dadurch gekennzeichnet, daß an dem kurbelzapfenseitigen Pleuelteil (3) ein Anker (28) befestigt ist, der sich innerhalb des Hohlraums (10) erstreckt, wobei ein Ankerkopf (29) in den Pumpraum (15) ragt und sich die Druckfeder (27) an dem Ankerkopf (29) abstützt.

7. Pleuelstange nach Anspruch 6,
dadurch gekennzeichnet, daß das Verzögerungsglied (5) der Fluidfeder von einer Scheibe (50) gebildet wird, die unter Bildung eines Überströmspaltes (46) in dem rohrförmig ausgebildeten kolbenzapfenseitigen Pleuelteil (3) verschieblich gelagert ist.

8. Pleuel nach Anspruch 7,
dadurch gekennzeichnet, daß die Scheibe (50) von dem Anker (28) durchsetzt ist, wobei der Ankerkopf (29) eine Dichtfläche (44) aufweist, die mit einer Dichtfläche (43) der Scheibe (50) zusammenwirkt und die Scheibe gegen die Dichtfläche (44) des Ankerkopfes (29) von einer sich an einem Federsitz (52) abstützenden Druckfeder (18) kraftbeaufschlagt gehalten ist.

9. Pleuelstange nach Anspruch 7 oder 8,
dadurch gekennzeichnet, daß die Scheibe (50) eine als kalibrierte Bohrung ausgeführte Überströmöffnung (47) aufweist, die den Hohlraum (10) mit dem Pumpraum (15) fluidisch verbindet.

10. Pleuelstange nach Anspruch 4 oder 5,
dadurch gekennzeichnet, daß in dem Hohlkörper ein Innenrohr (32) angeordnet ist, das den ersten Hohlraum (10) von einem zweiten Hohlraum (20) trennt und in dem Innenrohr (32) ein vom Druckkolben (41) bewegter Schieber (42) geführt ist.

11. Pleuelstange nach Anspruch 10,
dadurch gekennzeichnet, daß in dem Schieber (42) Verbindungsöffnungen (39) zwischen dem Pumpenraum (15) und dem ersten Hohlraum (10) vorgesehen sind.

12. Pleuelstange nach Anspruch 10 oder 11,
dadurch gekennzeichnet, daß das Innenrohr (32) an seinem pumpenkammerseitigen Ende einen radialen Bund (32') aufweist, der den zweiten Hohlraum (20) von der Pumpenkammer (15) trennt, wobei in dem radialen Bund (32') das Verzögerungsglied (5) angeordnet ist.

13. Pleuelstange nach Anspruch 12,
dadurch gekennzeichnet, daß als Verzögerungsglied (5) in dem radialen Bund (32') mindestens eine Überströmöffnung (22) mit einem Rückschlagventil (40) eingebracht ist.

14. Pleuelstange nach Anspruch 4 und 13,
dadurch gekennzeichnet, daß die Druckfeder (27) an dem radialen Bund (32') abgestützt ist und zur Kraftbeaufschlagung des Rückschlagventils (40) dient.

15. Pleuelstange nach einem der Ansprüche 10 bis 14,
dadurch gekennzeichnet, daß zur Bildung einer zweiten Dämpfungsstufe das innenrohrseitige Ende des Schiebers (42) einen sich zu einer umlaufenden Steuerkante (23) hin verjüngenden Konus (24) aufweist.

16. Pleuelstange nach Anspruch 15,
dadurch gekennzeichnet, daß in dem Innenrohr (32) Öffnungen (21) vorgesehen sind, so daß der Pumpraum (15) mit dem zweiten Hohlraum (20) fluidisch verbindbar ist, indem bei axialer Verschiebung des Druckkolbens die Öffnungen (21) von der Steuerkante (23) freigebbar sind.

17. Pleuelstange nach Anspruch 16,
dadurch gekennzeichnet, daß die Dämpfung der zweiten Stufe der Fluidfeder (2) durch die hydraulisch wirksamen Flächen des Kolbens (41) im Verhältnis zum Volumen des Pumpraums (15) und dem Gesamtvolumen der Hohlräume (10 und 20) bestimmt ist.

18. Pleuelstange nach Anspruch 16,
dadurch gekennzeichnet, daß die Öffnungen (21) mit einem Rückschlagventil (19) versehen sind, das den Rückstrom des Drucköls aus dem zweiten Hohlraum (20) entlang des Konus (24) verhindert.

19. Pleuelstange nach einem der Ansprüche 1 bis 18,
dadurch gekennzeichnet, daß der Hohlraum (10) über eine Ölbohrung (14) im Kurbelzapfenauge (30) mit einer Kurbelzapfenlagertasche (13) und der Pumpraum (15) über eine Ölbohrung (16) im Schwenklager (34) mit einer Lagertasche (17) verbunden ist, wobei die Druckölversorgung durch eine Druckleitung (11) in der Kurbelwelle erfolgt und im Bereich der Ölzuführung in den Hohlraum (10) ein Rückschlagventil (12) vorgesehen ist.

20. Pleuelstange nach Anspruch 19,
dadurch gekennzeichnet, daß das Rückschlagventil (12) in einer Grundplatte (26) des Hohlkörpers (25) angeordnet ist.

21. Pleuelstange nach einem der Ansprüche 1 bis 20,
dadurch gekennzeichnet, daß die Lagertasche (17) und die Kurbelzapfenlagertasche (13) sich in Form einer Nut bogenförmig über einen Winkel von ca. 130° symmetrisch zur Pleuelstangenlängsachse erstrecken und in axialer Richtung lediglich eine geringe Breite aufweisen, so daß die druckbeaufschlagte Fläche der Lagertaschen (13, 17) geringer ist als die Querschnittsfläche des Druckkolbens (41).

22. Pleuelstange nach einem der Ansprüche 10 bis 21,
dadurch gekennzeichnet, daß der Hohlkörper (25) sich bis in den Bereich des Kolbengelenkelementes (35 oder 69) erstreckt.

23. Pleuelstange nach Anspruch 22,
dadurch gekennzeichnet, daß in dem Endabschnitt des Hohlkörpers (25) (Pleuelhals 31) ein Einsatzstück (73) angeordnet ist, welches eine nach außen gerichtete Ringschulter (74) bildet, die das Außenmaß des Querschnittes des Hohlkörpers (25) überragt und die Umfangsfläche der Ringschulter als Schiebepassung (36) ausgebildet ist.

24. Pleuelstange nach Anspruch 22 oder 23,
dadurch gekennzeichnet, daß der Druckkolben (141) ein gemeinsames Bauteil mit dem Kolben (54) und dem Kolbengelenkelement (35 oder 69) bildet, wobei von einem Kolbenboden (55) der Pumpraum (15) begrenzt ist.

25. Pleuelstange nach einem der Ansprüche 22 bis 24,
dadurch gekennzeichnet, daß der Schieber (42) mittels eines Gewindes (68) an dem Kolbengelenkelement (35, 69) befestigt ist, und eine vorzugsweise zentrisch angeordnete Vertiefung (75) aufweist.

26. Pleuelstange nach Anspruch 24 oder 25,
dadurch gekennzeichnet, daß eine an dem oberen Ende des Schiebers (42) angeordnete radiale Wand (42') den Pumpraum (15) und einen erweiterten Pumpraum (15') trennt, wobei die Pumpräume (15 und 15') über Öffnungen (39, 62) fluidisch kommunizieren.

27. Pleuelstange nach einem der Ansprüche 22 bis 26,
dadurch gekennzeichnet, daß das kolbenseitige Pleuelteil (4) einen lösbaren Anschlag (109) aufweist, der fluidisch dichtend einen Zwischenraum (57) zwischen dem Hohlkörper (25), dem Kolbengelenkelement (35 oder 69) und der Ringschulter (74) begrenzt, in dem ein Elastomerring (58) aufgenommen ist.

28. Pleuelstange nach Anspruch 27,
dadurch gekennzeichnet, daß das Kclbengelenkelement (35, 69) eine Öffnung (59) aufweist, so daß der Zwischenraum (57) fluidisch mit dem Innenraum des Kurbelgehäuses verbindbar ist, indem bei axialer Verschiebung des Druckkolbens (141) die Öffnung (59) von der Steuerkante der Ringschulter (74) freigebbar ist.

29. Pleuelstange nach Anspruch 2 und Anspruch 25 oder 26,
dadurch gekennzeichnet, daß die radiale Wand (42') einstückig an dem Schieber (42) angeformt ist und die Verbindungsöffnungen (39) aufweist.

30. Pleuelstange nach Anspruch 29,
dadurch gekennzeichnet, daß der Kolbenbolzen (35) Dichtringe (60) zur fluidischen Abdichtung gegen das Kolbenbolzenauge (33) aufweist.

31. Pleuelstange nach Anspruch 3 und Anspruch 25 oder 26,
dadurch gekennzeichnet, daß die Wand (42') an dem Gelenkkopf (69) angeformt ist, wobei im radial äußeren Bereich der Wand (42') eine zum Einsatzstück (73) offene Aussparung (76) zur Aufnahme eines Elastomerrings (64) angeordnet ist.

32. Pleuelstange nach Anspruch 31,
dadurch gekennzeichnet, daß der Gelenkkopf (69) ein oder mehrteilig ausgebildet ist, und in der Lagerschale (53) durch einen in dem Kolben (54) verschraubten Spannring (65) gehalten ist.

33. Pleuelstange nach Anspruch 32,
dadurch gekennzeichnet, daß ein Entlüftungskanal (66) vorgesehen ist, welcher den Gewindeauslauf des Spannrings (65) in dem Kolbenbereich benachbart des größten Gelenkkopfdurchmessers mit einer Entlüftungsöffnung (67) im Kolbenboden (55) verbindet.

34. Pleuelstange nach einem der Ansprüche 31 bis 33,
dadurch gekennzeichnet, daß in der Lagerschale (53) Aussparungen zur Aufnahme eines Dichtringes (60) vorgesehen sind.

35. Pleuelstange nach einem der vorhergehenden Ansprüche, dadurch gekennzeichnet,
daß das dem Kurbelzapfen zugeordnete Pleuelteil (3) wesentlich länger als das dem Kolben zugeordnete Pleuelteil (4) ist.

## Claims

1. A connecting rod to transmit the energy between a piston (54) and a crankshaft in a reciprocating engine, whereby the connecting rod has two connecting rod parts (3, 4) which can be moved axially in relation to one another in the longitudinal direction of the connecting rod which are connected together via a fluid spring (2) which works in a lengthwise direction as an energy accumulator, whereby the part of the connecting rod on the piston side (4) has a rotating bearing (34) supported in the piston to guide a piston link element (35, 69) and the part of the connecting rod (3) connected to a crank pin (7) on the crankshaft has a crank pin bearing (6) with a crank pin boss (30),
**characterised in that**
the fluid spring (2) is designed as single- or multi-step fluid spring (2) and connected to the fluid spring (2) is a time delay device (5) which operates in the direction of work of the fluid spring and transmits the energy absorbed by the fluid spring (2) in slow motion to the crankshaft, whereby the reciprocating engine has a compressed oil lubrication system and one or each stage of the fluid spring (2) forms part of the compressed oil lubrication system of the reciprocating engine.

2. A connecting rod in accordance with Claim 1,
characterised in that the rotating bearing (34) comprises a cylindrical piston pin boss (33) in which a piston pin (35) is held in such a manner that it can revolve.

3. A connecting rod in accordance with one of Claims 1 to 3,
characterised in that the rotating bearing (34) comprises a spherically shaped bearing shell (53) to take a spherical segment link head (69) in the manner of a ball-and-socket joint.

4. A connecting rod in accordance with Claim 2 or 3,
characterised in that the part of the connecting rod (3) connected to the crank pin (7) is designed as a hollow body (25) which forms a hollow space (10) which guides the part ofthe connecting rod (4) connected to the piston which has a pressure piston (41 or 141) which can be moved axially, which delimits a purnp chamber (15) in a manner which seals it against fluids and which is held non-positively against a stop (9) next to the end (connecting rod neck 31) of the part of the connecting rod (3) on the crank pin side by means of a pressure spring (27).

5. A connecting rod in accordance with Claim 4,
characterised in that the pressure piston (41 or 141) is positioned within the hollow space (10) and is guided by means of a push fit (36).

6. A connecting rod in accordance with Claim 4 or 5,
characterised in that an anchor (28) is fixed to the part of the connecting rod (3) on the crank pin side and extends within the hollow space (10) with an anchor head (29) protruding into the pump chamber (15) and the pressure spring (27) resting on the anchor head (29).

7. A connecting rod in accordance with Claim 6,
characterised in that the time delay device (5) of the fluid spring (2) is formed by a disk (50) which is seated in the tubular part of the connecting rod (3) on the crank pin side in such a way that it can be moved to form an overflow gap (46).

8. A connecting rod in accordance with Claim 7,
characterised in that the anchor (28) passes through the disk (50) with the anchor head (29) having a sealing surface (44) which works together with a sealing surface (43) on the disk (50) and the disk is held against the sealing surface (44) of the anchor head (29) by means of a pressure spring (18) resting on a spring seat (52) by the application of force.

9. A connecting rod in accordance with Claim 7 or 8,
characterised in that the disk (50) has an overflow opening (47) designed as a calibrated hole which connects the hollow space (10) to the pump chamber (15) for fluids.

10. A connecting rod in accordance with Claim 4 or 5,
characterised in that positioned within the hollow body is a inner tube (32) which separates the first hollow space (10) from a second hollow space (20), and a slide (42) moved by the pressure piston (41) is guided in the inner tube (32).

11. A connecting rod in accordance with Claim 10,
characterised in that in the slide (42) are provided connecting holes (39) between the pump chamber (15) and the first hollow space (10).

12. A connecting rod in accordance wiih Claim 10 or 11,
characterised in that there is a radial shoulder (32') on the pump chamber side of the inner tube (32) which separates the second hollow space (20) from the pump chamber (15) with the time delay device (5) being positioned in the radial shoulder (32').

13. A connecting rod in accordance with Claim 12,
characterised in that at least one overflow opening (22) with a return valve (40) is fitted in the radial shoulder (32') as a time delay device (5).

14. A connecting rod in accordance with Claims 4 and 13,
characterised in that the pressure spring (27) rests on the radial shoulder (32') and serves to apply force to the return valve (40).

15. A connecting rod in accordance with one of Claims 10 to 14,
characterised in that in order to form a second damping stage the internal tube side end of the slide (42) has a cone (24) which tapers to a peripheral control edge (23).

16. A connecting rod in accordance with Claim 15,
characrerised in that openings (21) are provided in the inner tube (32) such that the pump chamber (15) can be connected for fluids to the second hollow space (20) in that the openings (21) can be released by the control edge (23) when the pressure piston is moved axially.

17. A connecting rod in accordance with Claim 16,
characterised in that the damping of the second stage of the fluid spring (2) is determined by the hydraulically effective surfaces of the piston (41) in relation to the volume of the pump chamber (15) and the total volume ofthe hollow spaces (10 and 20).

18. A connecting rod in accordance with Claim 16,
characterised in that the openings (21) are provided with a return valve (19) which prevents the compressed oil from flowing back out of the second hollow space (20) along the cone (24).

19. A connecting rod in accordance with one of Claims 1 to 18,
characterised in that the hollow space (10) is connected via an oil hole (14) in the crank pin boss (30) to a crank pin bearing pocket (13) and the pump chamber (15) is connected via an oil hole (16) in the rotating bearing (34) to a bearing pocket (17), the compressed oil being supplied through a pressure line (11) in the crankshaft and a return valve (12) being provided in the area ofthe oil supply in the hollow space (10).

20. A connecting rod in accordance with Claim 19,
characterised in that the return valve (12) is positioned in a base plate (26) in the hollow body (25).

21. A connecting rod in accordance with one of Claims 1 to 20,
characterised in that the bearing pocket (17) and the crank pin bearing pocket (13) curve in the form of a channel over an angle of approx. 130° symmetrically to the lengthwise axis of the connecting rod and have a narrow axial width such that the surface of the bearing pockets (13, 17) to which pressure is applied is smaller than the cross-sectional surface of the pressure piston (41).

22. A connecting rod in accordance with one of Claims 10 to 21,
characterised in that the hollow body (25) extends to the area of the piston link element (35 or 69).

23. A connecting rod in accordance With Claim 22,
characterised in that a spacer (73) is positioned in the end section of the hollow body (25) (connecting rod neck 31) and forms an outward facing ring shoulder (74) which extends beyond the overall size of the cross section of the hollow body (25), and the peripheral surface of the ring shoulder is designed as a push fit (36).

24. A connecting rod in accordance with Claim 22 or 23,
characterised in that the pressure piston (141) forms a common component with the piston (54) and the piston link element (35 or 69) whereby the pump chamber (15) is delimited by a piston crown (55).

25. A connecting rod in accordance with one of Claims 22 to 24,
characterised in that the slide (42) is fixed to the piston link element (35, 69) by means of a thread (68) and has a preferably centrally positioned indentation (75).

26. A connecting rod in accordance with Claim 24 or 25,
characterised in that a radial wall (42') positioned at the upper end of the slide (42) separates the pump chamber (15) and an enlarged pump room (15'), with the pump chambers (15, 15') communicating for fluids by means of openings (39, 62).

27. A connecting rod in accordance with one of Claims 22 to 26,
characterised in that the part of the connecting rod on the piston side (4) has a detachable stop (109) which limits a space (57) between the hollow hody (25), the piston link element (35 or 69) and the ring shoulder (74) to form a fluid-proof seal by receiving an elastomer ring (58).

28. A connecting rod in accordance with Claim 27,
characterised in that piston link element (35, 69) has an opening (59) so that the space (57) can be connected for fluids to the inner chamber of the crankcase in that when the pressure piston (141) is moved axially the opening (59) can be released by the control edge of the ring shoulder (74).

29. A connecting rod in accordance with Claim 2 and Claim 25 or 26,
characterised in that the radial wall (42') is formed as one piece with the slide (42) and has connecting openings (39).

30. A connecting rod in accordance with Claim 29,
characterised in that the piston pin (35) has sealing rings (60) to make a fluid-tight seal against the piston pin boss (33).

31. A connecting rod in accordance with Claim 3 and Claim 25 or 26,
characterised in that the wall (42') is formed with the link head (69) with a recess (76) open the spacer (73) to take an elastomer ring (64) being positioned in the radially outer area of the wall (42').

32. A connecting rod in accordance with Claim 31,
characterised in that the link head (69) is designed as one or more parts and is fixed in the bearing shell (53) by means of a clamping ring (65) screwed into the piston (54).

33. A connecting rod in accordance with Claim 32,
characterised in that a vent duct (66) is provided which connects the thread run-out of the clamping ring (65) in the piston area near the greatest link head diameter to a vent opening (67) in the piston crown (55).

34. A connecting rod in accordance with one of Claims 31 to 33,
characterised in that recesses are provided in the bearing shell (53) to take a sealing ring (60).

35. A connecting rod in accordance with one of the preceding claims,
characterised in that the part of the connecting rod (3) allocated to the crank pin is considerably longer than the part of the connecting rod (4) allocated to the piston.

## Revendications

1. Bielle pour la transmission de l'énergie entre un piston (54) et un vilebrequin dans un moteur à pistons, la bielle présentant deux parties de bielle (3, 4) déplaçables axialement l'une par rapport à l'autre dans la direction longitudinale de la bielle, les parties de bielle étant reliées fonctionnellement ensemble par l'intermédiaire d'un ressort fluidique (2) agissant en direction longitudinale, faisant office d'accumulateur d'énergie, la partie de bielle (4), située côté piston, présentant un palier de pivotement (34) logé dans le piston, pour assurer le guidage d'un élément d'articulation de piston (35, 69), et la partie de bielle (3), associée à un maneton (7) du vilebrequin, présentant un palier de maneton (6) doté d'un oeillet de maneton (30), caractérisée en ce que le ressort fluidique (2) est réalisé sous la forme d'un ressort fluidique (2) à un ou plusieurs étages, et au ressort fluidique (2) est associé un organe de retardement (5) agissant dans la direction de travail du ressort fluidique, qui fournit l'énergie captée par le ressort fluidique (2), de façon étalée sur le temps au vilebrequin, le moteur à pistons présentant un système de lubrification à huile sous pression et un, ou chaque, étage du ressort fluidique (2) faisant partie du système de lubrification par huile sous pression du moteur à pistons.

2. Bielle selon la revendication 1, caractérisée en ce que le palier de pivotement (34) comprend un oeillet pour axe de piston (33) cylindrique et un axe de piston (35), y étant logé avec une mobilité de pivotement.

3. Bielle selon l'une des revendications 1 à 2, caractérisée en ce que le palier de pivotement (34) comprend une coquille de palier (53) à forme sphérique, pour supporter, à la façon d'une articulation sphérique, une tête d'articulation (69) présentant une couche sphérique.

4. Bielle selon la revendication 2 ou 3, caractérisée en ce que la bielle (3) associée au maneton (7) est réalisée sous la forme d'un corps creux (25) formant un espace creux (10) et guidant la partie de bielle (4) associée au piston, partie qui présente un piston à pression (41 ou 141) mobile axialement, délimitant fluidiquement de façon étanche un enceinte de pompage (15) et maintenu, par une liaison à interaction de force, au moyen d'un ressort de compression (27) contre une butée (9) au voisinage de la zone d'extrémité (collet de bielle 31) de la partie de bielle (3) située du côté du maneton.

5. Bielle selon la revendication 4, caractérisée en ce que le piston à pression (41 ou 141) est disposé à l'intérieur de l'espace creux (10) et est guidé avec un ajustement coulissant (36).

6. Bielle selon la revendication 4 ou 5, caractérisée en ce que sur la partie de bielle (3), située côté maneton, est fixé un boulon d'ancrage (28) s'étendant à l'intérieur de l'espace creux (10), une tête d'ancrage (29) pénétrant dans l'enceinte de pompage (15) et le ressort de compression (27) prenant appui sur la tête d'ancrage (29).

7. Bielle selon la revendication 6, caractérisée en ce que l'organe de retardement (5) du ressort fluidique est constitué par un disque (50) monté déplaçable dans la partie de bielle (3) située côté axe de piston et de réalisation tubulaire, en formant un interstice de déversement (46).

8. Bielle selon la revendication 7, caractérisée en ce que le disque (50) est traversé par le boulon d'ancrage (28), la tête de boulon d'ancrage (29) présentant une face d'étanchéité (44) qui coopère avec une face d'étanchéité (43) appartenant au disque (50), et le disque étant maintenu, sollicité par une force, contre la face d'étanchéité (44) de la tête de boulon d'ancrage (59), au moyen d'un ressort de compression (18) prenant appui sur un siège de ressort (52).

9. Bielle selon la revendication 7 ou 8, caractérisée en ce que la rondelle (50) présente une ouverture de déversement (47), réalisée sous la forme d'orifice calibré, reliant fluidiquement l'espace creux (10) à l'enceinte de pompage (15).

10. Bielle selon la revendication 4 ou 5, caractérisée en ce que dans le corps creux est disposé un tube intérieur (32) qui sépare le premier espace creux (10) d'un deuxième espace creux (20), et dans le tube intérieur (32) étant guidé un coulisseau (42) déplacé par le piston de compression (41).

11. Bielle selon la revendication 10, caractérisée en ce que dans le coulisseau (42) sont prévues des ouvertures de liaison (39), entre l'enceinte de pompage (15) et le premier espace creux (10).

12. Bielle selon la revendication 10 ou 11, caractérisée en ce que le tube intérieur (32) présente sur son extrémité, opposée à la chambre de pompe, une collerette radiale (32') qui sépare le deuxième espace creux (20) de la chambre de pompe (15), l'élément de retardement (5) étant disposé dans la collerette radiale (32').

13. Bielle selon la revendication 12, caractérisée en ce qu'on ménage dans la collerette radiale (32') au moins une ouverture de déversement (22) dotée d'un clapet anti-retour (40).

14. Bielle selon les revendications 4 et 13, caractérisée en ce que le ressort de compression (27) prend appui sur la collerette radiale (32') et sert à soumettre le clapet anti-retour (40) à une force.

15. Bielle selon l'une des revendications 10 à 14, caractérisée en ce que, pour former un deuxième étage d'amortissement, l'extrémité ,située du côté tube intérieur du coulisseau (42), présente un cône (24) qui va en s'effilant vers une arête de commande (23) faisant le pourtour.

16. Bielle selon la revendication 15, caractérisée en ce que des ouvertures (21) sont prévues dans le tube intérieur (32), de manière que l'enceinte de pompage (15) puisse être relié fluidiquement au deuxième espace creux (20), du fait que lors d'un déplacement axial du piston de compression, les ouvertures (21) peuvent être libérées par l'arête de commande (23).

17. Bielle selon la revendication 16, caractérisée en ce que l'amortissement du deuxième étage de ressort fluidique (2) est déterminé par les faces, agissant hydrauliquement, du piston (41) par rapport au volume de l'enceinte de pompage (15) et au volume global des espaces creux (10 et 20).

18. Bielle selon la revendication 16, caractérisée en ce que les ouvertures (21) sont dotées d'un clapet anti-retour (19) qui empêche tout retour de flux d'huile sous pression depuis le deuxième espace creux (20) le long du cône (24).

19. Bielle selon l'une des revendications 1 à 18, caractérisée en ce que l'espace creux (10) est relié, par un perçage à huile (14) ménagé dans oeillet de maneton (30), à une poche de palier à maneton (13) et l'enceinte de pompage (15) est relié, par un perçage à huile (16) ménagé dans le palier de pivotement (34), à une poche de palier (17), l'alimentation en huile sous pression s'effectuant par une conduite à pression (11) ménagée dans le vilebrequin, et un clapet anti-retour (12) étant prévu dans la zone de l'amenée d'huile dans l'espace creux (10).

20. Bielle selon la revendication 19, caractérisée en ce que le clapet anti-retour (12) est disposé dans une plaque de fond (26) du corps creux (25).

21. Bielle selon l'une des revendications 1 à 20, caractérisée en ce que la poche de palier (17) et la poche de palier de maneton (13) s'étendent sous la forme d'une rainure à forme d'arc sur un angle d'environ 130°, symétriquement par rapport à l'axe longitudinal de la bielle, et présentent en direction axiale seulement une faible largeur, de manière que l'aire de la surface, exposée à la pression, des poches de palier (13, 17) soit plus petite que l'aire de la section transversale du piston de compression (41).

22. Bielle selon l'une des revendications 10 à 21, caractérisée en ce que le corps creux (25) s'étend jusque dans la zone de l'élément d'articulation de piston (35 ou 69).

23. Bielle selon la revendication 22, caractérisée en ce que, dans la section d'extrémité du corps creux (25) (collerette de bielle 31), est disposée une pièce d'insert (73) qui constitue un épaulement annulaire (74) orienté vers l'extérieur, qui dépasse de la dimension extérieure de la section transversale du corps creux (25), et la surface périphérique de l'épaulement annulaire est réalisé sous la forme d'un ajustement coulissant (36).

24. Bielle selon la revendication 22 ou 23, caractérisée en ce que le piston à pression (141) constitue un composant commun avec le piston (54) et l'élément d'articulation de piston (35 ou 69), l'enceinte de pompage (15) étant délimitée par un fond de piston (55).

25. Bielle selon l'une des revendications 22 à 24, caractérisée en ce que le coulisseau (42) est fixé sur l'élément d'articulation de piston (35, 69) au moyen d'un filetage (68) et présente un creusement (75) ménagé de préférence centralement.

26. Bielle selon la revendication 24 ou 25, caractérisée en ce qu'une paroi radiale (42'), disposée sur l'extrémité supérieure du coulisseau (42), sépare l'enceinte de pompage (15) et une enceinte de pompage (15') agrandie, les enceintes de pompage (15 et 15') communiquant fluidiquement par des ouvertures (39, 62).

27. Bielle selon l'une des revendications 22 à 26, caractérisée en ce que la partie de bielle (4), située côté piston, présente une butée (105) désolidarisable, qui délimite de façon fluidique avec étanchéité un espace intermédiaire (57) entre le corps creux (25), l'élément d'articulation sphérique (35 ou 69) et l'épaulement annulaire (74), espace intermédiaire dans lequel est logée une bague en élastomère (58).

28. Bielle selon la revendication 27, caractérisée en ce que l'élément d'articulation de piston (35, 69) présente une ouverture (59) de manière que l'espace intermédiaire (57) puisse être relié fluidiquement à l'espace intérieur du carter de vilebrequin, par le fait que, en cas de déplacement axial du piston de compression (141), l'ouverture (59) peut être libérée par l'arête de commande de l'épaulement annulaire (74).

29. Bielle selon la revendication 2 et la revendication 25 ou 26, caractérisée en ce que la paroi radiale (42') est formée d'une seule pièce sur le coulisseau (42) et présente les ouvertures de liaison (39).

30. Bielle selon la revendication 29, caractérisée en ce que l'axe de piston (35) présente des bagues d'étanchéité (60) destinées à assurer l'étanchéité fluidique contre oeillet d'axe de piston (33).

31. Bielle selon la revendication 3 et la revendication 25 ou 26, caractérisée en ce que la paroi (42') est formée d'un seul tenant sur la tête d'articulation (69), un évidement (76), ouvert vers la pièce d'insertion (73), étant ménagé dans la zone extérieure radialement de la paroi (42'), pour loger une bague en élastomère (64).

32. Bielle selon la revendication 31, caractérisée en ce que la tête d'articulation (69) est réalisée en une ou plusieurs parties et est maintenue dans la coquille de palier (53) au moyen d'un anneau de serrage (65) vissé dans le piston (54).

33. Bielle selon la revendication 32, caractérisée en ce qu'est prévu un canal de désaération (66), qui relie la sortie de filetage de la bague de serrage (65), dans la zone de piston, au voisinage du diamètre maximal de la tête d'articulation, à une ouverture de désaération (67) ménagée dans le fond de piston (55).

34. Bielle selon l'une des revendications 31 à 33, caractérisée en ce que des évidements destinés à recevoir une bague d'étanchéité (60) sont prévus dans la coquille de palier (53).

35. Bielle selon l'une des revendications précédentes, caractérisée en ce que la partie de bielle (3), associée au maneton de vilebrequin, est sensiblement plus longue que la partie de bielle (4) associée au piston.
